# EUROPEAN PATENT APPLICATION

(11) **EP 1 535 526 A1**
(43) Date of publication of application: **01.06.2005**
(21) Application number: 03078760.0
(22) Date of filing: 26.11.2003
(51) Int. Cl.: A41C 5/00, A41C 3/10

(54) **Process and equipment for making a surface finish with different elastic coefficient of a brassiere and the surface finish**

(71) Applicant: Huang, Shih-Chin, Taipei, Taiwan, R.O.C. (TW)
(72) Inventor: Huang, Shih-Chin, Taipei, Taiwan, R.O.C. (TW)
(74) Representative: Gee, Steven William

(57) **Abstract**

An equipment for making a surface finish of a bra includes a concial first mold (10), a second mold (20) having a hole (21) to allow extension of the first mold (10), a textile (1a) sandwiched between the first mold (10) and the second mold (20) and a temperature controller (30) to control the sections (11,12,13) of the first mold to respectively have a specific temperature. The textile is able to have different elastic coefficients after the first mold (10) in inserted into the hole (21) of the second mold (20) and the actuation of the heaters (110,120,130) of the first mold (10) by the controlling buttons (32) of the temperature controller (30). Therefore, the surface finish from the textile is able to cope with different curvatures of the bra when stitched onto the bra.

## Description

### BACKGROUND OF THE INVENTION

### 1. Field of the Invention

The present invention relates to a method and equipment for making a surface finish of a bra, and more particularly to the method and equipment to make a surface finish having different elastic coefficients such that when the surface finish is stitched to the bra, the surface of the surface finish can be evenly stitched.

### 2. Description of Related Art

It is noted that a surface finish of a conventional bra is cone shaped, which easily causes uneven stitch on sides of the bra when the surface finish is stitched on the bra. Therefore, to overcome the shortcoming, lace strips are applied to the seams of the bra to embed the uneven stitch of the surface finish. Another method to overcome the disadvantage is to use a heater to preheat the surface finish such that the surface finish is able to attach to the bra as even as possible.

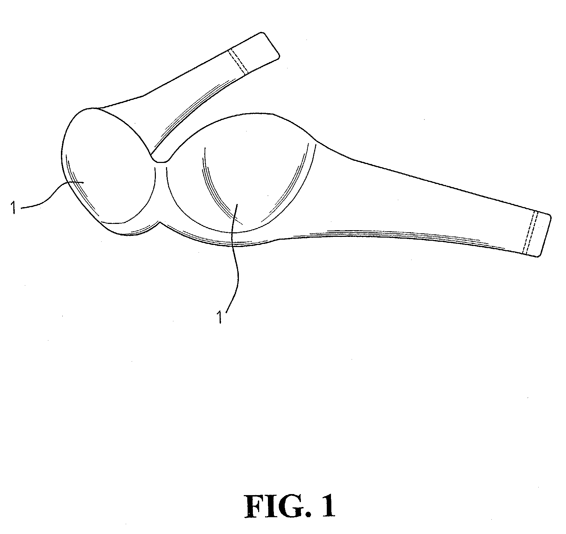

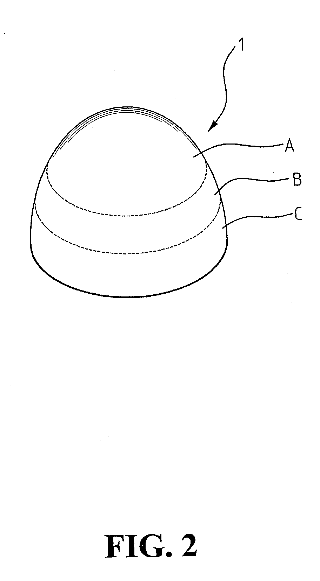

With reference to Figures 1 and 2, it is noted that a surface finish of a conventional conical bra 1 may be divided into three different sections. The first section A has the largest deformation, and the third section C has a deformation less than that of the second B. Due to the difference in deformation extent in different sections A, B, C, when the surface finish is to be stitched to edges of the bra 1, either the surface finish is too loose to be evenly stitched on the bra 1 or the surface finish is too tight to be evenly stitched on the bra 1, which is because the entire surface finish is consistent in elastic coefficient. Under such a circumstance, it is almost impossible to nicely and evenly attach the surface finish on the bra 1.

To overcome the shortcomings, the present invention intends to provide an improved surface finish produced by an equipment specially designed to make the surface finish with different elastic coefficient.

### SUMMARY OF THE INVENTION

The primary objective of the invention is to provide an improved surface finish with different elastic coefficient such that the surface finish can be evenly stitched on the bra.

Another objective of the invention is to provide method for making the surface finish with different elastic coefficient, wherein two molds are prepared, a textile is placed between the two molds, the two molds are heated respectively and then the first mold is placed in the second mold to generate different elastic coefficient on the textile.

Still another objective of the present invention is that the first mold has heaters each with a specific temperature such that when the textile is heated by the heaters, the textile is able to have different elastic coefficient.

Other objects, advantages and novel features of the invention will become more apparent from the following detailed description when taken in conjunction with the accompanying drawings.

### BRIEF DESCRIPTION OF THE DRAWINGS

Figure 1 is a perspective view of a conventional bra;

Figure 2 is a schematic view showing a cup of the bra in Figure 1;

Figure 3 is an exploded perspective view showing a first mold and a second mold in accordance with the present invention;

Figure 4 is an exploded perspective view of a preferred embodiment of the equipment of the present invention.

### DETAILED DESCRIPTION OF THE PREFERRED EMBODIMENT

With reference to Figures 1 and 2, in order to have a smooth surface of a surface finish covering a bra 1, the surface finish should have different elastic coefficient to deal with different curvatures of the bra 1. For example, the bra 1 is divided into section A, section B and section C, wherein the curvature of the section A is the largest among the others and the curvature of the section C is smaller than that of the section B. Therefore, it is preferred that the surface finish of the bra has different elastic coefficient to cope with the different curvature characteristic of the bra 1.

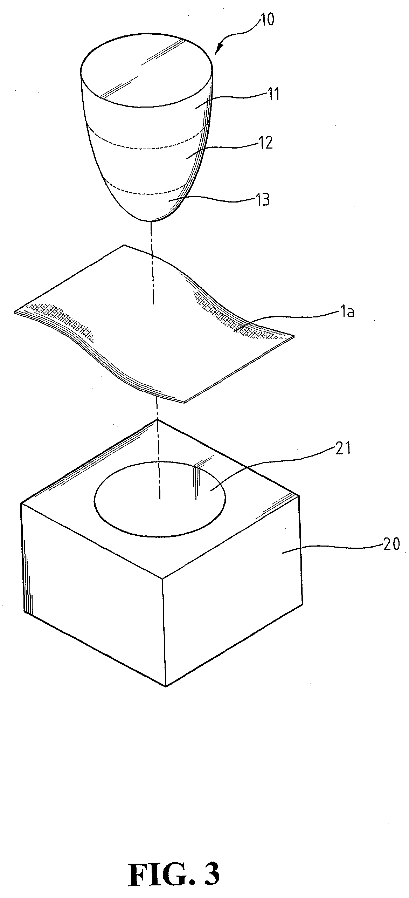

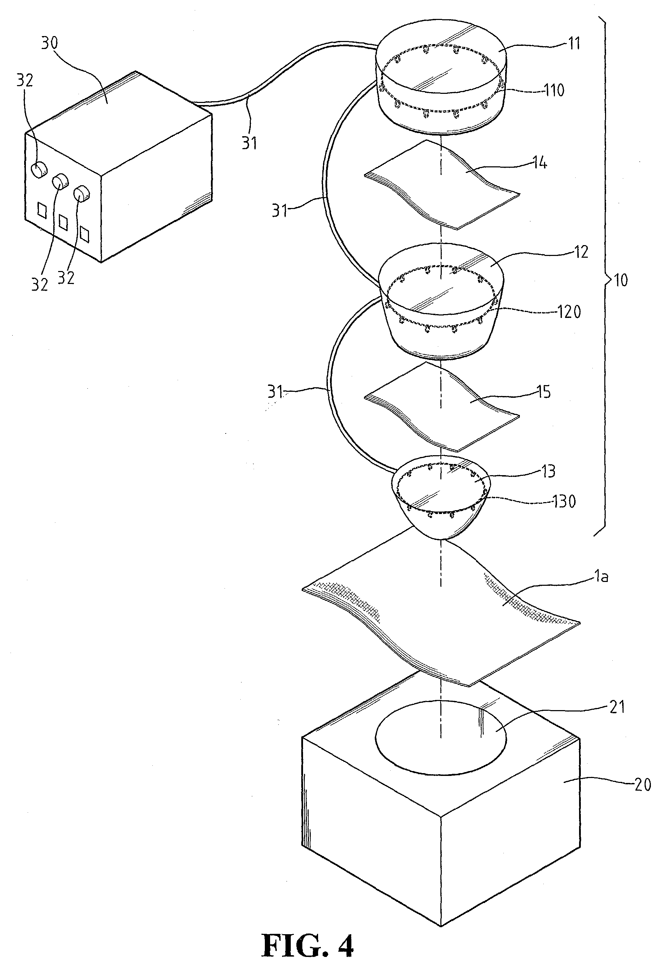

With reference to Figures 3 and 4, it is noted that the preferred equipment to make the surface finish of the present invention includes a first mold 10, a second mold 20 and a temperature controller 30. A textile 1a is placed between the first mold 10 and the second mold 20 such that when the first mold 10 and the second mold 20 are combined, the textile 1a can be formed into the surface finish as required. Detailed description regarding how the surface finish is made will be given as follows.

Preferably, the first mold 10 is conical and composed of multiple sections 11, 12, 13 which in combination, the first mold 10 is formed. Each of the sections 11, 12, 13 has a heater 110, 120, 130 mounted around an inner face of each of the sections 11, 12, 13. An insulator 14, 15 is placed between two adjacent sections 11, 12 and 12, 13 to isolate heat conduction among the sections 11,12,13. Preferably, the insulator 14, 15 is a piece of heat insulation paper. The second mold 20 has a hole 21 corresponding to the first mold 10 so that the sections 11, 12, 13 of the first mold 10 are able to extend into the hole 21. Further, the temperature controller 30 has wires 31 respectively connected to a corresponding one of the heaters 110, 120, 130 and controlling buttons 32 respectively controlling the actuation of the corresponding heaters 110, 120, 130 to allow each of the sections 11, 12, 13 to have a specific temperature.

When the equipment of the present invention is used, in order to cope with different curvatures of the bra 1 (as shown in Figure 1), different temperature characteristic should be applied to the textile 1a. Thus, it is noted that the center region of the textile 1a is extended deepest into the hole 21 when the first mold 10 and the second mold 20 are combined so that the center region of the textile 1a should have the largest elastic coefficient. Therefore, the section 13 should have the lowest temperature to allow the center region of the textile 1a to have sufficient elasticity to be smoothly wrapped around the bra region where the curvature is the largest. On the other hand, the section 11 should have the largest temperature to allow the outer region of the textile 1a to have the lowest elastic coefficient to allow the outer region of the textile 1a to be easily formed between the first mold 10 and the second mold 20. As a consequence, the median region of the textile 1a should be formed with a median temperature. As a result, the heater 110 has a temperature higher than the temperatures of the heaters 120, 130 and the heater 130 has a temperature lower than the temperature of the heaters 110, 120.

The process of the present invention to make the surface finish as described above includes the steps of:

(1) preparing a conical first mold 10 consisting of sections 11, 12, 13 each provided with a heater 110, 120, 130 and a second mold 20 with a hole 21 to allow the sections 11,12,13 to extend therein;

(2) preparing a heat insulator 14, 15 between two adjacent sections 11, 12 and 12, 13 to prevent heat conduction between sections 11, 12, 13;

(3) placing a textile 1a between the first mold 10 and the second mold 20 and then inserting the first mold 10 into the hole 21 of the second mold 20; and

(4) preparing a temperature controller 30 with wires 31 respectively connected to a corresponding one of the heaters 110, 120, 130 of each of the sections 11, 12, 13 and controlling buttons 32 to control actuation of each of the heaters 110, 120, 130 to allow the sections 11, 12, 13 to respectively have a specific temperature.

Even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. An equipment for making a surface finish of a bra comprising:
a first mold consisting of sections each with a heater provided on an inner face of a corresponding one of the sections;
a heat insulator sandwiched between two adjacent sections to prevent heat conduction between the two adjacent sections;
a second mold having a hole to allow the sections of the first mold to extend into the hole; and
a temperature controller with wires respectively connected to a corresponding one of the heaters and controlling buttons to respectively control actuation of the heaters to allow each of the sections to have a specific temperature.

2. The equipment as claimed in Claim **1**, wherein the heat insulator is a piece of heat insulation paper.

3. The equipment as claimed in Claim **2**, wherein the first mold is conical in appearance.

4. A process for making a surface finish of a bra comprising steps of:
(1) preparing a conical first mold consisting of sections each provided with a heater and a second mold with a hole to allow the sections to extend therein;
(2) preparing a heat insulator between two adjacent sections and to prevent heat conduction between sections;
(3) placing a textile between the first mold and the second mold and then inserting the first mold into the hole of the second mold; and
(4) preparing a temperature controller with wires respectively connected to a corresponding one of the heaters of each of the sections and controlling buttons to control actuation of each of the heaters to allow the sections to respectively have a specific temperature, such that the textile is able to have different elastic coefficients in different regions of the textile.

5. The process as claimed in Claim **4** further comprising a step of preparing a heat insulator between two adjacent sections of the first mold to prevent heat conduction between the two adjacent sections.

6. The process as claimed in Claim **5**, wherein the heat insulator is a piece of heat insulation paper.

7. The process as claimed in Claim **6**, wherein the first mold is conical in appearance.

8. A surface finish made by the process as claimed in Claim **4**.

## Amended claims

### Amended claims in accordance with Rule 86(2) EPC.

**1.** Equipment (10,20,30) for making a surface finish of a bra comprising:
a first mold (10) consisting of sections (11,12,13) each with a heater (110,120,130) provided on an inner face of a corresponding one of the sections;
a heat insulator (14,15) sandwiched between two adjacent sections (11,12, 12,13) to prevent heat conduction between the two adjacent sections;
a second mold (20) having a hole (21) to allow the sections of the first mold to extend into the hole; and
a temperature controller (30) with wires (31) respectively connected to a corresponding one of the heaters and controlling buttons (32) to respectively control actuation of the heaters to allow each of the sections to have a specific temperature.

**2.** The equipment as claimed in Claim 1, wherein the heat insulator (14,15) is a piece of heat insulation paper.

**3.** The equipment as claimed in Claim 2, wherein the first mold (10) is conical in appearance.

**4.** A process for making a surface finish of a bra comprising steps of:
(1) preparing a conical first mold (10) consisting of sections (11,12,13) each provided with a heater (110,120,130) and a second mold (20) with a hole (21) to allow the sections to extend therein;
(2) preparing a heat insulator (14,15) between two adjacent sections (11,12, 12,13) and to prevent heat conduction between sections;
(3) placing a textile (1a) between the first mold (10 and the second mold (20) and then inserting the first mold into the hole (21) of the second mold; and
(4) preparing a temperature controller (30) with wires (31) respectively connected to a corresponding one of the heaters (110,120,130) of each of the sections (11,12,13) and controlling buttons (32) to control actuation of each of the heaters to allow the sections to respectively have a specific temperature, such that the textile is able to have different elastic coefficients in different regions of the textile.

**5.** The process as claimed in Claim 4 further comprising a step of preparing a heat insulator (14,15) between two adjacent sections (11,12, 12,13) of the first mold (10) to prevent heat conduction between the two adjacent sections.

**6.** The process as claimed in Claim 5, wherein the heat insulator (14,15) is a piece of heat insulation paper.

**7.** The process as claimed in Claim 6, wherein the first mold (10) is conical in appearance.

**8.** A textile material for use as a surface finish of a bra, the textile material being produced according to the process as claimed in Claim 4.
